# EUROPÄISCHE PATENTSCHRIFT

(11) **EP 3 057 822 B1**
(45) Veröffentlichungstag und Bekanntmachung des Hinweises auf die Patenterteilung: **18.09.2019**
(21) Anmeldenummer: 14786610.7
(22) Anmeldetag: 17.10.2014
(51) Int. Cl.: B60L 5/16, F16C 35/06, F16C 19/30, F16C 19/38, F16C 33/58

(54) **WÄLZLAGER**
ROLLING-ELEMENT BEARING
PALIER À ROULEMENT

(30) Priorität: 18.10.2013 DE 202013009246 U
(43) Veröffentlichungstag der Anmeldung: 24.08.2016
(73) Patentinhaber: Liebherr-Components Biberach GmbH, 88400 Biberach an der Riß (DE)
(72) Erfinder: FIESEL, Thomas, 89584 Ehingen-Risstissen (DE); SAUTER, Herbert, 88400 Biberach an der Riß (DE)
(74) Vertreter: Thoma, Michael
(86) Internationale Anmeldenummer: PCT/EP2014/002806
(87) Internationale Veröffentlichungsnummer: WO 2015/055317

(56) Entgegenhaltungen:
- EP-A2- 0 158 015
- EP-B1- 2 092 204
- WO-A2-2008/088213
- DE-A1-102011 083 824

## Beschreibung

Die vorliegende Erfindung betrifft ein Wälzlager, insbesondere ein mittenfreies Großwälzlager, mit zwei konzentrischen Laufringen, von denen der eine Laufring eine zum anderen Laufring hin offene Nut und der andere Laufring einen in die genannte Nut eingreifenden Nasenring umfasst, wobei der Nasenring an der Nut in axialer Richtung des Wälzlagers durch zumindest zwei Axiallager, die auf gegenüberliegenden Nasenringstirnseiten angeordnet sind, und in radialer Richtung durch zumindest ein Radiallager, das auf einer Nasenringmantelfläche angeordnet ist, abgestützt ist.

Bei Großwälzlagern für spezielle Einsatzzwecke, vgl. DE 10 2011 083 824 und EP 0 158 015, wirken bisweilen beträchtliche Biegemomente und Kippkräfte auf die Lagerringe, die zu Verwindungen und einem Winkelversatz der Laufringe zueinander führen können, so dass vorzeitiger Verschleiß im Bereich der Laufringe und Wälzkörper eintritt. Solche Großwälzlager können Maße von mehreren Metern im Durchmesser aufweisen und bspw. an Kranen eingesetzt werden, um bspw. den Abstützmast eines Schiffskrans oder Hafenkrans drehbar zu lagern und abzustützen, wobei hier nicht nur vertikale Kräfte abzufangen sind, sondern auch Biegemomente bzw. Kippbelastungen aufzufangen
sind. Die Verwindungs- und Kippproblematik wird dabei noch verschärft, wenn die Mitte bzw. das Zentrum des Lagers auszusparen ist, um das abzustützende Bauteil, bspw. den genannten Kranstützmast, durch das Lager hindurchtreten zu lassen, bspw. um am hindurchtretenden Teil einen Drehantrieb anbringen zu können. Die Lagerringe eines solchen mittenfreien Großwälzlagers können aus Platzgründen insbesondere in radialer Richtung nicht beliebig groß bauen, so dass die erreichbaren Flächenträgheitsmomente der Laufringe begrenzt sind.

Ein Großwälzlager der eingangs genannten Art zeigt bspw. die Schrift EP 20 92 204 B1, gemäß der der Nasenring des einen Laufrings durch zwei gegenüberliegende Axiallager und zwei gegenüberliegende Radiallager in der Nut des anderen Laufrings eingespannt sein soll, wobei die genannten gegenüberliegenden Axiallager und Radiallager unerwünschte Verformungen des Nasenringes verhindern und eine Ablösung der Laufringe in radialer Richtung vermeiden sollen. Ein ähnliches Großwälzlager und dessen Einbausituation am Stützmast eines Schiffkrans zeigt die Schrift WO 2008/088 213 A2. Während die genannten Schriften sich im Wesentlichen mit der Problematik des Ablösens der Radiallager in Folge von Verwindungen der Laufringe befassen und ein solches Lupfen der Radiallager durch das Einspannen des Nasenrings von gegenüberliegenden Mantelflächenseiten her vermeiden wollen, kommt es indes immer noch zu Verkantungen und Verwindungen im Bereich der Axiallager.

Üblicherweise machen die vertikalen Kranbelastungen und die entsprechenden Reaktionskräfte in der Kranmastlagerung immer noch einen großen bzw. beträchtlichen Teil der Wälzlagerbelastung aus, so dass üblicherweise das untere Axiallager, das die vertikalen Kranlasten abfangen muss, in Form eines tragkräftigen Zylinderrollenlagers ausgebildet ist, dessen Zylinderrollen eine relativ große Zylinderrollenbreite besitzen, um eine ausreichend große Berührungslinie zu haben und die Flächenpressungen erträglich zu halten. Andererseits reagieren solche breiten Zylinderrollenlager kritisch auf Verkippungen bzw. Schiefstellungen der Laufbahnen zueinander, da hier sehr rasch nur noch ein sehr kleiner Teil der Zylinderrollen tatsächlich trägt.

Der vorliegenden Erfindung liegt die Aufgabe zugrunde, ein verbessertes Wälzlager der eingangs genannten Art zu schaffen, das Nachteile des Standes der Technik vermeidet und letzteren in vorteilhafter Weise weiterbildet. Insbesondere soll ein mittenfreies Großwälzlager geschaffen werden, das hohe Axiallasten abfangen kann, ohne hierbei gegenüber Kippbelastungen und Schiefstellungen der Laufbahnen anfällig zu sein.

Erfindungsgemäß wird die genannte Aufgabe durch ein Wälzlager gemäß Anspruch 1 gelöst. Bevorzugte Ausgestaltungen der Erfindung sind Gegenstand der abhängigen Ansprüche.

Es wird also vorgeschlagen, den Nasenring gegenüber der Nut und damit den einen Laufring gegenüber dem anderen Laufring durch ein drittes Axiallager abzustützen, um auch mit schmäler bauenden Lagern hohe Axialkräfte abfangen zu können und auf verschiedene Abstützpunkte verteilen zu können. Dabei werden die zwei auf derselben Nasenringstirnseite angeordneten Axiallager nicht nur quer voneinander beabstandet, sondern auch in axialer Richtung zueinander versetzt, um bzgl. Verwindungen und Schiefstellungen eine höhere Robustheit zu erzielen. Erfindungsgemäß ist der Nasenring durch ein drittes Axiallager in axialer Richtung an der Nut abgestützt, wobei zwei Axiallager auf derselben Seite des Nasenrings auf separaten, in axialer Richtung des Wälzlagers zueinander versetzten Laufbahnen angeordnet sind. Durch den Axialversatz der Laufbahnen der beiden auf derselben Nasenringstirnseite angeordneten Axiallager erhalten die Axiallager, obwohl sie auf derselben Nasenringseite angeordnet sind, unterschiedliche Hebelstützverhältnisse, so dass eine bessere Abstützung bei Verwindungen und Laufbahnschiefstellungen erzielt werden kann und nie beide Axiallager gleichzeitig in derselben Weise Verkantungen oder Abhebungen unterworfen sind.

Vorteilhafterweise können die beiden auf derselben Nasenringstirnseite angeordnete Axiallager jeweils eine Breite besitzen, die kleiner ist als die Breite des auf der gegenüberliegenden Nasenringstirnseite angeordneten Axiallagers. Werden als Axiallager Zylinderrollenlager verwendet, ist die genannte Breite die Länge der zylindrischen Wälzkörper und/oder die Breite der Laufbahn des Lagers. Durch die Verwendung zweier unabhängiger, relativ schmaler Laufbahnen für die beiden auf derselben Nasenringstirnseite angeordneten Axiallager ist eine Anpassung der Schiefstellung aus einer Verformung der Anschlusskonstruktion besser möglich. Zudem bringen zwei solche abgesetzte, relativ schmale Laufbahnen in der Summe einen längeren Linienkontakt zwischen Wälzkörpern und Laufbahnen, insbesondere auch wenn aufgrund von Verformungen geringfügige Schiefstellungen der Laufbahnen entstehen. Zudem sind schmale Laufbahnen auch fertigungstechnisch mit höherer Präzision zu fertigen, so dass auch Formtoleranzen weniger auftreten und ins Gewicht schlagen.

Der genannte Axialversatz der beiden auf derselben Stirnflächenseite angeordneten Axiallager kann grundsätzlich unterschiedlich stark ausgebildet bzw. bemessen sein. Um einerseits eine spürbare Abkopplung bezüglich Verwindungen und unterschiedliche Stützverhältnisse zu erreichen, beträgt der Versatz in Weiterbildung der Erfindung zumindest 10% des Wälzkörperdurchmessers der beiden genannten Axiallager. Um andererseits eine insgesamt kompakte Lagergeometrie und Nasenkontur zu erzielen, die den Nasenring nicht zu sehr ausdünnt und stabil lässt, kann der genannte Versatz weniger als 200% des genannten Wälzkörperdurchmessers betragen. Haben die beiden auf derselben Nasenringstirnseite angeordneten Axiallager unterschiedliche Wälzkörperdurchmesser, beziehen sich die genannten Versatzmaße vorteilhafterweise auf den größeren Wälzkörperdurchmesser.

Vorteilhafterweise kann der genannte Axialversatz der beiden auf derselben Nasenringstirnseite angeordneten Axiallager zwischen 10% und 100%, vorzugsweise etwa 15% bis 35% des Wälzkörperdurchmessers betragen. Der Versatz kann insbesondere derart gewählt sein, dass in radialer Richtung betrachtet die beiden Wälzlager mit ihren Wälzkörpern einander noch überdecken.

Betrachtet man die auf gegenüberliegenden Stirnseiten des Nasenrings angeordneten Axiallager, können die drei Axiallager vorteilhafterweise unterschiedliche Laufbahndurchmesser besitzen, wobei in vorteilhafter Weiterbildung der Erfindung zumindest eines der beiden auf derselben Nasenringstirnseite angeordneten Axiallager keine Überdeckung mit dem auf der anderen Nasenringstirnseite angeordneten Axiallager aufweist, wenn man die Axiallager in Axialrichtung betrachtet. Die genannte Axialrichtung meint dabei die Drehachse des Wälzlagers.

In vorteilhafter Weiterbildung der Erfindung kann dabei vorgesehen sein, dass eines der zwei auf derselben Nasenringstirnseite angeordneten Axiallager das auf der anderen Nasenringstirnseite angeordnete Axiallager in axialer Richtung betrachtet überdeckt, während das andere der zwei auf derselben Nasenringstirnseite liegenden Axiallager keine Überdeckung mit dem genannten, auf der anderen Nasenringstirnseite liegenden Axiallager hat.

In alternativer Weiterbildung der Erfindung kann die Anordnung der drei Axiallager auch derart getroffen sein, dass beide der auf derselben Nasenringstirnseite liegenden Axiallager keine Überdeckung - bei Betrachtung in Axialrichtung - mit dem auf der anderen Nasenringstirnseite liegenden Axiallager hat, wobei insbesondere vorgesehen sein kann, dass das auf der genannten anderen Nasenringstirnseite liegende Axiallager zwischen den beiden auf derselben Nasenringstirnseite liegenden Axiallager angeordnet ist, d.h. die Wälzkörper des auf der einen Nasenringstirnseite liegenden Axiallagers auf einem Laufbahndurchmesser laufen, der zwischen dem Laufbahndurchmesser der beiden anderen, auf einer gemeinsamen Nasenringstirnseite liegenden Axiallager liegt.

In radialer Richtung ist der Nasenring ebenfalls auf gegenüberliegenden Seiten des Nasenrings abgestützt, wobei zwei Radiallager vorgesehen sind, die auf gegenüberliegenden Mantelflächen des genannten Nasenrings angeordnet sind.

Die beiden Radiallager können dabei in axialer Richtung betrachtet zwischen den auf gegenüberliegenden Nasenringstirnseiten angeordneten Axiallagern angeordnet sein.

Die Anordnung der Radiallager zueinander kann dabei grundsätzlich verschieden sein. In vorteilhafter Weiterbildung der Erfindung können die beiden Radiallager einander in radialer Richtung betrachtet überdecken, bspw. in einer gemeinsamen Ebene, die senkrecht zur Drehachse des Wälzlagers steht, angeordnet sein.

Die Ausbildung der genannten Radiallager kann dabei verschieden getroffen sein. Gemäß einer vorteilhaften Ausbildung der Erfindung können die beiden Radiallager Wälzkörper mit verschiedenen Geometrien besitzen, wobei insbesondere eines der Radiallager als Zylinderrollenlager ausgebildet und das andere Radiallager als Kugellager ausgebildet sein kann. Einerseits können durch die Verwendung des Zylinderrollenlagers hohe Radialkräfte bei kompakter radialer Bauweise übertragen werden, während andererseits durch das Kugellager, das eine Stützwirkung auch in zur Radialrichtung geneigten Richtungen besitzt, auch Kräfte mit Axialkomponenten abgetragen werden können.

In alternativer Weiterbildung der Erfindung können aber auch beide Radiallager denselben Wälzkörpertypus bzw. denselben Geometrietypus besitzen, insbesondere beide als Zylinderrollenlager ausgebildet sein.

Die Erfindung wird nachfolgend anhand bevorzugter Ausführungsbeispiele und zugehöriger Zeichnungen näher erläutert. In den Zeichnungen zeigen:

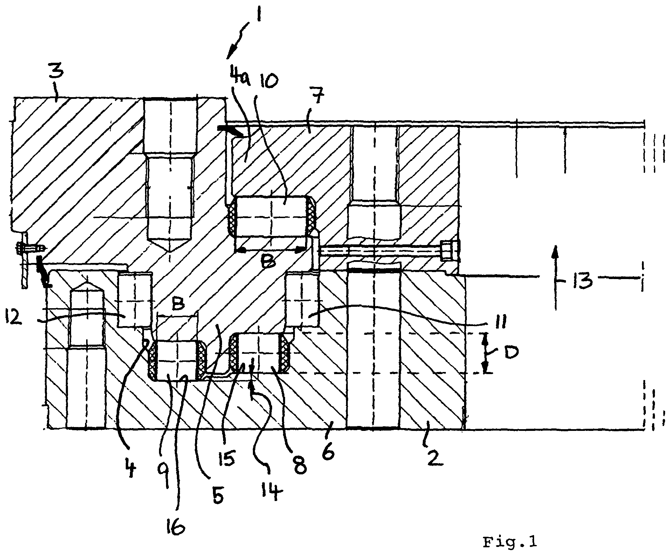

- Fig. 1:: einen Längshalbschnitt eines mittenfreien Großwälzlagers nach einer vorteilhaften Ausführung der Erfindung, gemäß der die beiden Laufringe durch drei Axiallager in Form von Zylinderrollenlagern und zwei Radiallagern ebenfalls in Form von Zylinderrollenlagern gegeneinander abgestützt sind,

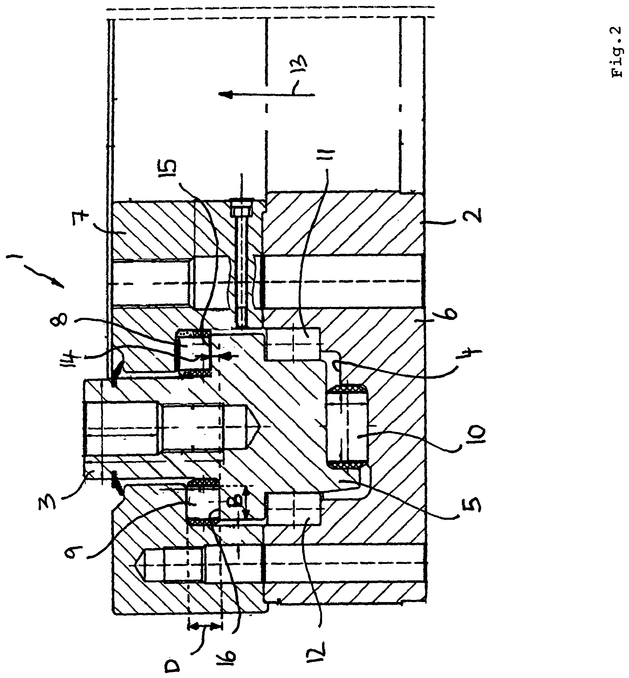

- Fig. 2:: einen Längshalbschnitt durch ein mittenfreies Großwälzlager gemäß einer weiteren vorteilhaften Ausführung der Erfindung, bei der die beiden Laufringe ebenfalls durch drei Axiallager in Form von Zylinderrollenlagern und zwei Radiallagern in Form von Zylinderrollenlagern gegeneinander abgestützt sind, und

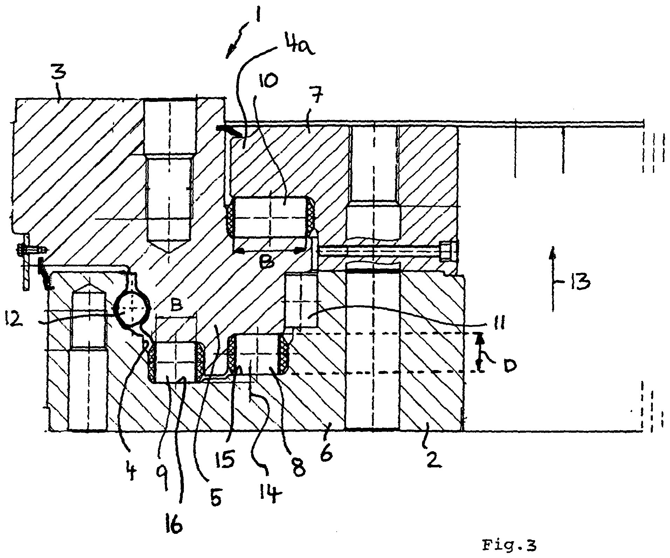

- Fig. 3:: einen Längshalbschnitt durch ein mittenfreies Großwälzlager gemäß einer weiteren vorteilhaften Ausführung der Erfindung, bei der die beiden Laufringe ähnlich der Ausführung nach Fig. 1 durch drei Axiallager in Form von Zylinderrollenlagern und durch zwei Radiallager gegeneinander abgestützt sind, wobei die eines der Radiallager als Zylinderrollenlager und das andere Radiallager als Kugellager ausgebildet ist.

Wie Fig. 1 - und auch die anderen Figuren - zeigen, kann das Wälzlager 1 zwei Laufringe 2 und 3 umfassen, von denen der eine Laufring 2 einen Innenring und der andere Laufring 3 einen Außenring bildet. Der genannte Innenring 2 kann einen kleineren Innendurchmesser als der Außenring 3 besitzen und/oder der Außenring 3 kann einen größeren Außendurchmesser als der genannte Innenring 2 besitzen.

Der eine Laufring 2, vorzugsweise der Innenring, kann eine zum anderen Laufring 3, vorzugsweise zum Außenring hin, eine offene Nut 4 besitzen, in die der andere Laufring 3 mit einem daran vorgesehenen Nasenring 5 unter Bildung eines Spalts bzw. mit allseitigem Abstand eingreift. Die genannte Nut 4 kann dabei vorteilhafterweise den Nasenring 5 von vier Seiten her umgreifen, und zwar an zwei gegenüberliegenden Manteflächenseiten und an zwei gegenüberliegenden Stirnflächenseiten des genannten Nasenrings 5.

Die genannte Nut 4 kann hierbei eine - grob gesprochen - U-förmige Bodenkontur umfassen, bei der der Nutboden - gemäß Fig. 1 rechts und links - von zwei Lagerringschenkeln umgriffen ist. Ferner kann die genannte Nut 4 auf einer dem Nutboden gegenüberliegenden Seite einen quer vorspringenden Fortsatz 4a besitzen, der den Nasenring 5 auf einer dem Nutboden gegenüberliegenden Seite stirnseitig umgreift. Insgesamt kann die genannte Nut 4 hinterschnitten ausgebildet sein. Um den Nasenring 5 in die genannte Nut 4 einsetzen zu können, kann der die Nut 4 aufweisende Laufring 2 aus einem Tragring 6 und einem darauf aufsetzbaren Haltering 7 zusammengesetzt sein, vgl. Fig. 1, 2 und 3.

Der genannte Nasenring 5 ist gegenüber der Nut 4 durch drei Axiallager 8, 9 und 10 sowie durch zwei Radiallager 11 und 12 abgestützt. Vorteilhafterweise können dabei zwei der genannten Axiallager 8 und 9 auf derselben - gemäß Fig. 1 der unteren - Nasenringstirnseite und das dritte Axiallager 10 auf der gegenüberliegenden Nasenringstirnseite angeordnet sein. Auch die Radiallager 11 und 12 können auf gegenüberliegenden Seiten, nämlich gegenüberliegenden Mantelflächenseiten des genannten Nasenrings 5 angeordnet sein, so dass der Nasenring 5 sowohl in axialer Richtung als auch in radialer Richtung zwischen auf gegenüberliegenden Seiten befindlichen Lagern sandwichartig eingebettet bzw. abgestützt ist. Der Nasenring 5 ist allseitig an der Nut 4 abgestützt.

Wie Fig. 1 zeigt, können die beiden auf derselben Nasenringstirnseite vorgesehenen Axiallager 8 und 9 nicht nur in radialer Richtung voneinander beabstandet und auf verschiedenen Laufbahnen angeordnet sein, sondern auch in axialer Richtung - d.h. in Richtung des Pfeils 13 - zueinander versetzt angeordnet sein, so dass die beiden Axiallager 8 und 9 nicht auf derselben Höhe liegen.

Der Axialversatz 14 kann dabei vorteilhafterweise etwa 15 bis 35, insbesondere etwa 20% des Durchmessers D der Wälzkörper der genannten Axiallager 8 und 9 betragen.

Die beiden auf derselben Nasenringstirnseite angeordneten Axiallager 8 und 9 können dabei eine Breite B - gemessen in Radialrichtung - besitzen, die jeweils kleiner ist als die Breite des auf der gegenüberliegenden Nasenringstirnseite angeordneten Axiallagers 10, wobei die Summe der beiden Breiten der beiden Axiallager 8 und 9 etwa der Breite des genannten anderen Axiallagers 10 entsprechen kann.

Die beiden auf derselben Nasenringstirnseite liegenden Axiallager 8 und 9 können derart positioniert sein, dass das eine Axiallager 9 sich bei Betrachtung in axialer Richtung mit dem auf der gegenüberliegenden Nasenringstirnseite liegenden Axiallager 10 überdeckt, während das andere Axiallager 8 keine solche Überdeckung zeigt.

Die beiden Radiallager 11 und 12 können einander gegenüberliegend angeordnet sein. Hiervon unabhängig kann es vorteilhaft sein, wenn die beiden Radiallager 11 und 12 zwischen den Axiallagern 8, 9 und 10 angeordnet sind, vgl. Fig. 1.

Wie Fig. 1 zeigt, können sowohl die Axiallager 8, 9 und 10 als auch die Radiallager 11 und 12 jeweils als Zylinderrollenlager ausgebildet sein.

Das in Fig. 2 gezeigte Wälzlager entspricht bzgl. vieler Merkmalskomplexe der Ausführung nach Fig. 1, insbesondere hinsichtlich der Anordnung der Radiallager 11 und 12 und unterscheidet sich von der Ausführung nach Fig. 1 im Wesentlichen durch die Anordnung der Axiallager. Auch bei Fig. 2 sind die auf derselben Nasenringstirnseite angeordneten Axiallager 8 und 9 in axialer Richtung zueinander versetzt. Allerdings ist die Anordnung dieser beiden Axiallager 8 und 9 dabei so getroffen, dass sie sich in axialer Richtung betrachtet nicht mit dem Axiallager 10 auf der gegenüberliegenden Nasenringstirnseite überdecken. Das genannte auf der gegenüberliegenden Nasenringstirnseite liegende Axiallager 10 ist in axialer Richtung betrachtet zwischen den beiden auf derselben Nasenringstirnseite liegenden Axiallagern 8 und 9 angeordnet.

Weiterhin kann, wie Fig. 2 zeigt, vorgesehen sein, dass die beiden auf derselben Stirnseite liegenden Axiallager 8 und 9 an den Haltering 7 abgestützt sind, während das dritte Axiallager 10 auf der gegenüberliegenden Nasenringstirnseite am Tragring 6 abgestützt ist. Hiervon unabhängig können die beiden auf derselben Nasenringstirnseite liegenden Axiallager 8 und 9 auf gegenüberliegende Mantelflächenseiten des Laufrings 3, insbesondere an entsprechenden Stufen in der mantelflächenseitigen Kontur abgestützt sein.

Insofern als die Ausführung nach Fig. 2 der Ausführung nach Fig. 1 entspricht, darf auf die vorhergehende Beschreibung verwiesen werden.

Wie Fig. 3 zeigt, können vorteilhafterweise auch unterschiedliche Wälzkörpertypen Verwendung finden. Insbesondere können die beiden Radiallager 11 und 12 verschiedene Wälzkörpergeometrien besitzen, wobei insbesondere eines der Radiallager 11 als Zylinderrollenlager und das andere Radiallager 12 als Kugellager ausgebildet sein kann. Vorteilhafterweise kann die Anordnung dabei derart getroffen sein, dass das Radialzylinderrollenlager auf der Innenseite und das Radialkugellager auf der Außenseite des Nasenrings 5 angeordnet ist, vgl. Fig. 3.

Insofern als die Ausführung nach Fig. 3 ebenfalls der Fig. 1 entspricht, darf ebenfalls auf die vorherige Beschreibung verwiesen werden. Weiterhin kann die genannte Radiallagerausbildung mit verschiedenen Wälzkörpergeometrien aber auch in eine Wälzlageranordnung gemäß Fig. 2 implementiert sein, so dass auch insofern auf die vorherige Beschreibung verwiesen werden darf.

## Patentansprüche

1. Wälzlager, insbesondere mittenfreies Großwälzlager, mit
zwei konzentrischen Laufringen (2, 3), von denen der eine Laufring (2) eine zum anderen Laufring (3) hin offene Nut (4) und der andere Laufring (3) einen in die genannte Nut (4) eingreifenden Nasenring umfasst, wobei
der Nasenring (5) an der Nut (4) in axialer Richtung (13) des Wälzlagers durch zumindest zwei Axiallager (8, 9, 10), die auf gegenüberliegenden Nasenringstirnseiten angeordnet sind, und in radialer Richtung des Wälzlagers durch zumindest ein Radiallager (11, 12), abgestützt ist, und
der Nasenring (5) in radialer Richtung an der Nut (4) durch zwei Radiallager (11, 12) abgestützt ist, die auf gegenüberliegenden Mantelflächenseiten des Nasenrings (5) angeordnet sind,
**dadurch gekennzeichnet, dass**
der Nasenring (5) durch ein drittes Axiallager (8, 9, 10) in axialer Richtung an der Nut (4) abgestützt ist, und
zwei Axiallager (8, 9) auf derselben Nasenringstirnseite, in axialer Richtung zueinander versetzten Laufbahnen (15, 16) angeordnet sind.

2. Wälzlager nach dem vorhergehenden Anspruch, wobei der axiale Versatz (14) der beiden Laufbahnen (15, 16) der auf derselben Nasenringstirnseite angeordneten Axiallager (8, 9) zwischen 10% und 200%, vorzugsweise 10% bis 100%, insbesondere 15% bis 35%, des Wälzkörperdurchmessers D dieser Axiallager (8, 9) beträgt.

3. Wälzlager nach einem der vorhergehenden Ansprüche, wobei die beiden auf derselben Nasenringstirnseite axialversetzt angeordneten Axiallager (8, 9) jeweils eine Breite B besitzen, die kleiner ist als die Breite B der auf der gegenüberliegenden Nasenringstirnseite angeordneten Axiallagers (10).

4. Wälzlager nach dem vorhergehenden Anspruch, wobei die Summe der Breiten B der beiden auf derselben Nasenringstirnseite liegenden Axiallager (8, 9) etwa der Breite B des auf der gegenüberliegenden Nasenringstirnseite sitzenden Axiallagers (10) entspricht.

5. Wälzlager nach einem der vorhergehenden Ansprüche, wobei eines der beiden auf derselben Nasenringstirnseite angeordneten Axiallager (9) das auf der gegenüberliegenden Nasenringstirnseite angeordnete Axiallager (10) in axialer Richtung betrachtet überdeckt, während das andere der beiden auf derselben Nasenringstirnseite sitzenden Axiallager (8) keine Überdeckung mit dem auf der gegenüberliegenden Nasenringstirnseite sitzenden Axiallager (10) besitzt.

6. Wälzlager nach einem der Ansprüche 1 bis 4, wobei beide auf derselben Nasenringstirnseite angeordneten Axiallager zu dem auf der gegenüberliegenden Nasenringstirnseite angeordneten Axiallager (1) überdeckungsfrei, versetzt angeordnet sind, wobei insbesondere das auf der genannten gegenüberliegenden Nasenringstirnseite angeordnete Axiallager (10) in axialer Richtung betrachtet zwischen den beiden auf derselben Nasenringstirnseite angeordneten Axiallagern (8, 9) positioniert ist.

7. Wälzlager nach einem der vorhergehenden Ansprüche, wobei die beiden Radiallager (11, 12) in radialer Richtung betrachtet zwischen den auf gegenüberliegenden Nasenringstirnseiten angeordneten Axiallagern (8, 9; 10) angeordnet sind.

8. Wälzlager nach einem der vorhergehenden Ansprüche, wobei die beiden Radiallager (11, 12) in radialer Richtung betrachtet einander überdecken, insbesondere in einer gemeinsamen Ebene, die senkrecht zur Wälzlagerdrehachse steht, angeordnet sind.

9. Wälzlager nach einem der vorhergehenden Ansprüche, wobei der Nasenring (5) durch genau zwei Radiallager (11, 12) und genau drei Axiallager (8, 9, 10) an der Nut (4) abgestützt ist, und/oder die beiden Laufringe (2, 3) durch genau zwei auf gegenüberliegenden Seiten angeordnete Radiallager und genau drei auf gegenüberliegenden Seiten angeordnete Axiallager zueinander abgestützt sind.

## Claims

1. Rolling bearing, in particular a center-free large rolling bearing, having
two concentric ball races (2, 3) of which the one ball race (2) comprises a groove (4) open toward the other ball race (3) and the other ball race (3) comprises a scraper ring engaging into the named groove (4), wherein
the scraper ring (5) is supported at the groove (4) in the axial direction (13) of the rolling bearing by at least two axial bearings (8, 9, 10) which are arranged at opposite front sides of the scraper ring, and is supported in radial direction of the rolling bearing by at least one radial bearing (11, 12), and
the scraper ring (5) is supported in the radial direction at the groove (4) by two radial bearings (11, 12) which are arranged at oppositely disposed jacket surface sides of the scraper ring (5),
**characterized in that**
the scraper ring (5) is supported at the groove (4) in the axial direction by a third axial bearing (8, 9, 10), and
two axial bearings (8, 9) are arranged at the same front side of the scraper ring in raceways (15, 16) offset from one another in the axial direction.

2. Rolling bearing in accordance with the preceding claim, wherein the axial offset (14) of the two raceways (15, 16) of the axial bearings (8, 9) arranged at the same front side of the scraper ring amounts to between 10% and 200%, preferably 10% to 100%, and in particular 15% to 35%, of the roller body diameter D of these axial bearings (8, 9).

3. Rolling bearing in accordance with one of the preceding claims, wherein the two axial bearings (8, 9) arranged axially offset at the same front side of the scraper ring each have a width B which is smaller than the width B of the axial bearing (10) arranged at the oppositely disposed front side of the scraper ring.

4. Rolling bearing in accordance with the preceding claim, wherein the sum of the widths B of the two axial bearings (8, 9) disposed at the same front side of the scraper ring approximately corresponds to the width B of the axial bearing (10) seated at the oppositely disposed front side of the scraper ring.

5. Rolling bearing in accordance with one of the preceding claims, wherein one of the two axial bearings (9) arranged at the same front side of the scraper ring covers the axial bearing (10) arranged at the oppositely disposed front side of the scraper ring, viewed in the axial direction, whereas the other one of the two axial bearings (8) seated at the same front side of the scraper ring does not have any coverage with the axial bearing (10) seated at the oppositely disposed front side of the scraper ring.

6. Rolling bearing in accordance with one of the claims 1 to 4, wherein both axial bearings arranged at the same front side of the scraper ring are arranged offset and without coverage with respect to the axial bearing (1) arranged at the oppositely disposed front side of the scraper ring, wherein the axial bearing (10) arranged at the named oppositely disposed front side of the scraper ring is in particular positioned between the two axial bearings (8, 9) arranged at the same front side of the scraper ring.

7. Rolling bearing in accordance with the preceding claim, wherein the two radial bearings (11, 12) are arranged, viewed in the radial direction, between the axial bearings (8, 9; 10) arranged at oppositely disposed front sides of the scraper ring.

8. Rolling bearing in accordance with one of the preceding claims, wherein the two radial bearings (11, 12) cover one another, viewed in the radial direction, and are in particular arranged in a common plane which is perpendicular to the axis of rotation of the rolling bearing.

9. Rolling bearing in accordance with one of the preceding claims, wherein the scraper ring (5) is supported at the groove (4) by exactly two radial bearings (11, 12) and by exactly three axial bearings (8, 9, 10); and/or the two ball races (2, 3) are supported with respect to one another by exactly two radial bearings arranged at oppositely disposed sides and by exactly three axial bearings arranged at oppositely disposed sides.

## Revendications

1. Palier à roulement, en particulier palier à roulement de grande taille à centre libre, avec
deux bagues de roulement (2, 3) concentriques, dont une bague de roulement (2) comprend une rainure (4) ouverte vers l'autre bague de roulement (3) et l'autre bague de roulement (3) comprend un ergot annulaire venant en prise avec ladite rainure (4), dans lequel
l'ergot annulaire (5) est soutenu au niveau de la rainure (4) dans une direction axiale (13) du palier de roulement par au moins deux paliers axiaux (8, 9, 10), qui sont disposés sur des côtés frontaux de l'ergot annulaire opposés, et dans une direction radiale du palier de roulement par au moins un palier radial (11, 12), et
l'ergot annulaire (5) est soutenu dans une direction radiale au niveau de la rainure (4) par deux paliers radiaux (11, 12), qui sont disposés sur des côtés de surfaces extérieures opposés de l'ergot annulaire (5),
**caractérisé en ce que**
l'ergot annulaire (5) est soutenu par un troisième palier axial (8, 9, 10) dans une direction axiale au niveau de la rainure (4), et
deux paliers axiaux (8, 9) sont disposés sur le même côté frontal d'ergot annulaire sur des voies de roulement (15, 16) décalées les unes par rapport aux autres dans une direction axiale.

2. Palier à roulement selon la revendication précédente, dans lequel le décalage axial (14) des deux voies de roulement (15, 16) des paliers axiaux (8, 9) disposés sur le même côté frontal d'ergot annulaire est compris entre 10 % et 200 %, de préférence va de 10 % à 100 %, en particulier de 15 % à 35 %, du diamètre de corps de roulement D desdits paliers axiaux (8, 9).

3. Palier à roulement selon l'une quelconque des revendications précédentes, dans lequel les deux paliers axiaux (8, 9) disposés de manière décalée axialement sur le même côté frontal d'ergot annulaire possèdent respectivement une largeur B, qui est inférieure à la largeur B du palier axial (10) disposé sur le côté frontal d'ergot annulaire opposé.

4. Palier à roulement selon la revendication précédente, dans lequel la somme des largeurs B des deux paliers axiaux (8, 9) situés sur le même côté frontal d'ergot annulaire correspond à peu près à la largeur B du palier axial (10) reposant sur le côté frontal d'ergot annulaire opposé.

5. Palier à roulement selon l'une quelconque des revendications précédentes, dans lequel un des deux paliers axiaux (9) disposés sur le même côté frontal d'ergot annulaire recouvre, vu dans une direction axiale, le palier axial (10) disposé sur le côté frontal d'ergot annulaire opposé, tandis que l'autre des deux paliers axiaux (8) reposant sur le même côté frontal d'ergot annulaire n'a aucun recouvrement avec le palier axial (10) reposant sur le côté frontal d'ergot annulaire opposé.

6. Palier à roulement selon l'une quelconque des revendications 1 à 4, dans lequel les deux paliers axiaux disposés sur le même côté frontal d'ergot annulaire sont disposés de manière décalée sans recouvrement par rapport au palier axial (1) disposé sur le côté frontal d'ergot annulaire opposé, dans lequel en particulier le palier axial (10) disposé sur ledit côté frontal d'ergot annulaire opposé est positionné, vu dans une direction axiale, entre les deux paliers axiaux (8, 9) disposés sur le même côté frontal d'ergot annulaire.

7. Palier à roulement selon l'une quelconque des revendications précédentes, dans lequel les deux paliers radiaux (11, 12) sont disposés, vus dans une direction axiale, entre les paliers axiaux (8, 9 ; 10) disposés sur des côtés frontaux d'ergot annulaire opposés.

8. Palier à roulement selon l'une quelconque des revendications précédentes, dans lequel les deux paliers radiaux (11, 12) se recouvrent l'un l'autre vus dans une direction radiale, en particulier sont disposés dans un plan commun, qui est perpendiculaire par rapport à l'axe de rotation de palier de roulement.

9. Palier à roulement selon l'une des revendications précédentes, dans lequel l'ergot annulaire (5) est soutenu par précisément deux paliers radiaux (11, 12) et précisément trois paliers axiaux (8, 9, 10) au niveau de la rainure (4), et/ou les deux bagues de roulement (2, 3) sont soutenues l'une par rapport à l'autre par précisément deux paliers radiaux disposés sur des côtés opposés et précisément trois paliers axiaux disposés sur des côtés opposés.
